# FASCICULE DE BREVET EUROPEEN

(11) **EP 0 504 478 B1**
(45) Date de publication et mention de la délivrance du brevet: **31.07.1996**
(21) Numéro de dépôt: 91119707.7
(22) Date de dépôt: 19.11.1991
(51) Int. Cl.: G01G 19/10, G01G 19/12

(54) **Dispositif indicateur de charge pour véhicules**
Ladegewicht-Anzeigevorrichtung für Fahrzeuge
Load indicating device for vehicles

(30) Priorité: 19.03.1991 CH 821/91; 09.04.1991 CH 1107/91; 09.04.1991 CH 1108/91
(43) Date de publication de la demande: 23.09.1992
(60) Demande divisionnaire: 96810013.1
(73) Titulaire: Riedo, Luc, CH-1800 Vevey (CH)
(72) Inventeur: Riedo, Luc, CH-1800 Vevey (CH)
(74) Mandataire: Dietlin, Henri

(56) Documents cités:
- WO-A-86/01888
- AT-B- 327 583
- AU-B- 602 530
- DE-B- 1 030 206
- FR-A- 1 353 831
- US-A- 4 375 839

## Description

La présente invention a pour objet un dispositif indicateur de charge pour véhicule, comprenant des vérins placés entre des parties fixes, respectivement mobiles d'une suspension et reliés à un instrument de mesure par un circuit de conduite.

Le brevet français No 1 353 831, de même que le brevet autrichien No 327 583 décrivent tous deux un dispositif pour l'indication d'une charge dans un véhicule, notamment un véhicule automobile. Dans les deux documents, on retrouve une installation hydraulique, qui comprend des vérins reliés à un réservoir par l'intermédiaire de conduites hydrauliques. Dans le brevet français, l'indicateur de l'état de charge comprend un cylindre à l'intérieur duquel coulisse un piston entraînant un index se déplaçant le long d'une échelle indicatrice. L'indicateur est surmonté d'un réservoir de liquide présentant à son extrémité inférieure une vanne de fermeture utilisée pour la mise à zéro du système lorsque le véhicule n'est pas chargé. Les vérins déplaçant le liquide vers l'indicateur sont reliés au dit indicateur par une conduite commune qui n'est pas en contact avec le réservoir lorsque la vanne de fermeture est fermée. Dans le dispositif décrit dans le brevet autrichien No 327 583, les conduites aboutissent simplement à un réservoir muni d'une fenêtre de lecture.

Dans le brevet US No 4 375 839 est décrit un dispositif de mesure pour l'estimation du poids d'un véhicule dans lequel un cylindre se déplace dans un deuxième cylindre contenant un liquide conducteur, le deuxième cylindre comportant à différents niveaux des capteurs reliés à des diodes émettrices de lumière. En fonctionnement, le premier cylindre fait monter le niveau de liquide et rend ainsi conducteur l'un après l'autre la succession de capteurs en indiquant ainsi selon l'exemple donné un remplissage du cylindre allant d'un premier quart à un deuxième quart et un troisième quart pour atteindre un niveau correspondant à la pleine charge.

Le dispositif indicateur de charge selon l'invention est caractérisé en ce que les vérins sont des rhéostats mis sous tension constitués d'une succession de bagues conductrices et de bagues isolées et dont la résistance varie en fonction du fléchissement de la suspension, reliés à un instrument de mesure par l'intermédiaire des conduites électriques, une sonde captant le débit traversant les rhéostats aboutissant à l'instrument de mesure qui affiche l'état de charge par l'intermédiaire de l'indicateur de charge.

Un vérin est prévu à chaque suspension. En particulier pour chaque essieu fixe d'un véhicule il est prévu deux vérins.

La forme intérieure des vérins peut être adaptée en fonction de la distance de travail ou du fléchissement de la suspension.

Dans un mode d'exécution préféré, les vérins sont des rhéostats mis sous tension et constitués d'une succession de bagues conductrices et de bagues isolées dont la résistance varie en fonction du fléchissement de la suspension, les rhéostats étant reliés à un instrument de mesure par l'intermédiaire de conduites électriques, une sonde captant le débit traversant les rhéostats aboutissant à l'instrument de mesure qui affiche l'état de charge par l'intermédiaire de l'indicateur de charge. Selon cette variante, le dispositif peut présenter une alimentation électrique des rhéostats par courant alternatif ou par courant continu.

Le dessin représente, à titre d'exemples, le mode d'exécution ainsi qu'une variante d'un dispositif indicateur de charge pour véhicule selon l'invention.

Dans le dessin :
la figure 1 est une vue schématique du mode d'exécution du dispositif indicateur de charge, et
la figure 2 est une vue en coupe d'un composant du dispositif de la figure 1.

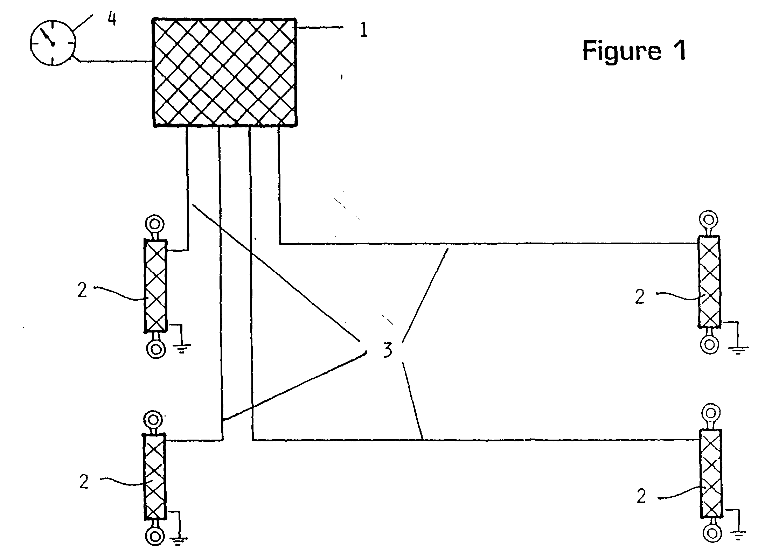

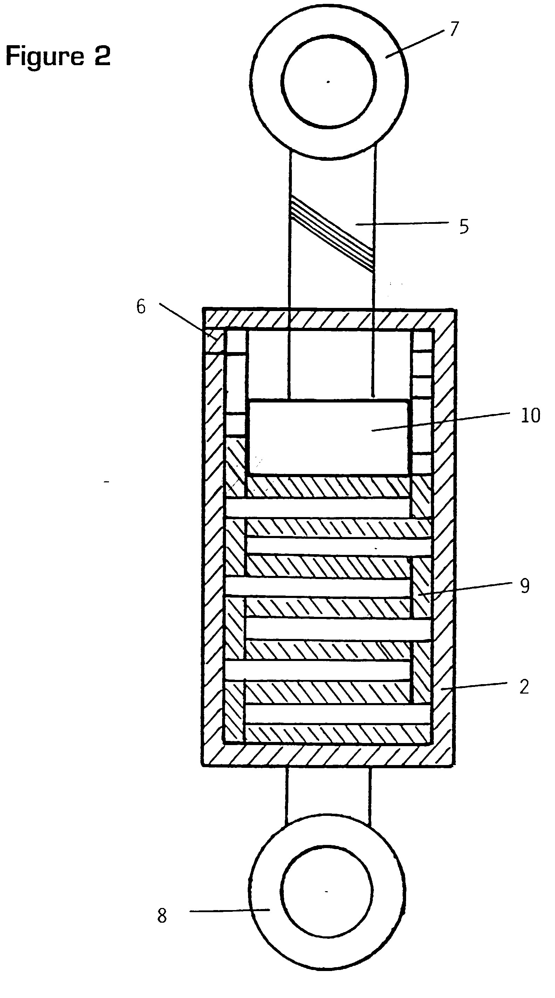

Dans le mode d'exécution des figures 1 et 2, le dispositif représente un ensemble électrique composé de cylindres isolés 2. Ces derniers font un ensemble d'éléments conducteurs et d'éléments isolants, agissant par capteurs électriques, magnétiques, statiques ou optiques, tous ces éléments débitent des résistances conformes à la charge du véhicule et sont reliés à un instrument de mesure 1 qui indique la charge à l'indicateur 4 du tableau de bord ou par lampes avec graduations inclues dans l'instrument de mesure même. Ce dispositif présente un avantage pour tous transporteurs de leur éviter d'aller faire le contrôle sur une bascule de pesage publique et par la même évite les amendes de surcharge.

Les cylindres 2 sont fixés (figure 2) dans la partie supérieure isolée à la partie fixe du véhicule et par la partie inférieure isolée à la partie mobile de la suspension. Par ces faits la lecture est instantanée à l'indicateur de charge 4 à n'importe quel niveau de charge du véhicule. L'instrument de mesure 1 (figure 1) est monté à un endroit bien voyant et isolé et bien lisible. Les conduites électriques 3 (figure 1) peuvent être de toutes sortes de sections et conducteurs, pourvu qu'il n'y ait pas de chute de tension.

Sur les véhicules où il n'y a pas de tension, on peut monter un instrument de mesure 1 (figure 1) avec alimentation intégrée. Pour les remorques ou véhicules qui n'ont pas de tableau de bord et pas d'alimentation électrique, on peut monter un instrument de mesure autonome à lampe témoin avec graduation ou cadran incorporé.

L'alimentation de l'instrument de mesure (figure 1) doit être très précise et bien isolée. On peut monter l'indicateur de charge 4 directement sur l'instrument de mesure par un système de cadran ou témoin de charge lumineux. Dans le cas d'un véhicule dont les dimensions ne permettraient pas la modification des cylindres (figure 2), on peut diminuer ou augmenter le volume intérieur des cylindres 2.

Dans le mode d'exécution des figures 1 et 2, les vérins ou cylindres 2 fonctionnent comme les rhéostats dont la résistance varie en fonction du fléchissement de la suspension et par conséquent de la charge. Ces cylindres 2 sont reliés par l'intermédiaire de conduites électriques 3 à l'instrument de mesure 1 qui indique l'état de charge au moyen de l'indicateur 4. Selon une variante non représentée, l'indication de la charge peut être donnée par des lampes multiples placées directement sur l'instrument de mesure 1.

Les cylindres 2 sont réalisés en matière isolante et contiennent un capteur 10 surmonté d'une tige 5. Entre le capteur 10 et le fond du cylindre 2 sont placées des bagues conductrices et isolées 9. La tige supérieure 5 est reliée à un anneau de fixation 7, lui- même fixé sur la partie mobile de la suspension, l'anneau inférieur 8 du cylindre 2 est relié à un essieu du véhicule. Le capteur ou sonde 10 est relié à l'instrument de mesure 1 par une sortie isolée 6 prévue dans le cylindre 2. Le captage des résistances formées par les bagues conductrices et isolantes 9 se fait au moyen du capteur 10 qui transmet son information à l'instrument de mesure 1.

## Revendications

1. Dispositif indicateur de charge d'un véhicule, comprenant des vérins placés entre des parties fixes, respectivement mobiles d'une suspension et reliés à un instrument de mesure par un circuit de conduites, caractérisé en ce que les vérins (2) sont des rhéostats mis sous tension constitués d'une succession de bagues conductrices et de bagues isolées et dont la résistance varie en fonction du fléchissement de la suspension, reliés à un instrument de mesure (1) par l'intermédiaire des conduites électriques (3), une sonde (10) captant le débit traversant les rhéostats aboutissant à l'instrument de mesure (1) qui affiche l'état de charge par l'intermédiaire de l'indicateur de charge (4).

2. Dispositif selon la revendication 1, caractérisé en ce qu'un vérin (2), est prévu à chaque suspension.

3. Dispositif selon la revendication 1, caractérisé en ce que deux vérins (2) sont prévus pour chaque essieu du véhicule.

4. Dispositif selon la revendication 1, caractérisé en ce que la forme intérieure des vérins est adaptée en fonction de la distance de travail ou du fléchissement de la suspension.

5. Dispositif selon la revendication 1, caractérisé en ce que l'alimentation électrique des rhéostats (2) se fait en courant alternatif ou continu.

## Patentansprüche

1. Ladegewicht-Anzeigevorrichtung für Fahrzeuge, welche Stellglieder aufweist, die zwischen den festen und beweglichen Teilen einer Aufhängung angeordnet und über einen Leitungskreis an ein Meßinstrument angeschlossen sind,
**dadurch gekennzeichnet, daß**
die Stellglieder (2) unter Spannung stehende Rheostate sind, die aus einer Reihenfolge von leitenden Ringen und isolierten Ringen bestehen, und deren Widerstand je nach der Durchbiegung der Aufhängung variiert und die an eine Meßinstrument (1) über elektrische Leitungen (3) und einen Meßgeber (10) angeschlossen sind, welcher den Durchsatz der Rheostate mißt, der an dem Meßinstrument (1) mündet, welches das Ladegewicht über einen Lastanzeiger (4) anzeigt.

2. Anzeigevorrichtung nach Anspruch 1,
**dadurch gekennzeichnet, daß**
an jeder Aufhängung ein Stellglied (2) angeordnet ist.

3. Anzeigevorrichtung nach Anspruch 1,
**dadurch gekennzeichnet, daß**
für jede Achse des Fahrzeugs zwei Stellglieder (2) vorgesehen sind.

4. Anzeigevorrichtung nach Anspruch 1,
**dadurch gekennzeichnet, daß**
das Innenprofil der Stellglieder je nach dem Arbeitshub oder der Durchbiegung der Aufhängung ausgelegt ist.

5. Anzeigevorrichtung nach Anspruch 1,
**dadurch gekennzeichnet, daß**
die Rheostate (2) entweder mit Wechselstrom oder mit Gleichstrom elektrisch gespeist werden.

## Claims

1. Device for indicating the load in a vehicle, comprising cylinders placed between stationary and, respectively, moving parts of the suspension and connected to a measuring instrument by a circuit of pipes, characterized in that the cylinders (2) are rheostats with voltage applied which consist of a series of conductive rings and of insulated rings and the resistance of which varies as a function of the flexing of the suspension, these rheostats being connected to a measuring instrument (1) by means of electrical pipes (3), a probe (10) for picking up the rate of flow through the rheostats terminating at the measuring instrument (1) which displays the state of load by means of the load indicator (4).

2. Device according to Claim 1, characterized in that one cylinder (2) is provided at each suspension point.

3. Device according to Claim 1, characterized in that two cylinders (2) are provided for each axle of the vehicle.

4. Device according to Claim 1, characterized in that the interior shape of the cylinders is designed to suit the working or flexing distance of the suspension.

5. Device according to Claim 1, characterized in that the rheostats (2) are electrically powered either with alternating current or with direct current.
